Europäisches Patentamt

European Patent Office

Office européen des brevets

(19)

(11) Numéro de publication : **0 056 757**
**B1**

(12) **FASCICULE DE BREVET EUROPÉEN**

(45) Date de publication du fascicule du brevet :
24.04.85

(21) Numéro de dépôt : 82400053.3

(22) Date de dépôt : 13.01.82

(51) Int. Cl.⁴ : **F 23 D 14/58**, F 24 H 1/24,
C 04 B 35/00

(54) Brûleur à gaz, procédé de fabrication dudit brûleur et chaudière utilisant un tel brûleur.

(30) Priorité : 15.01.81 FR 8100653

(43) Date de publication de la demande :
28.07.82 Bulletin 82/30

(45) Mention de la délivrance du brevet :
24.04.85 Bulletin 85/17

(84) Etats contractants désignés :
AT BE CH DE GB IT LI NL SE

(56) Documents cités :
FR-A- 1 056 454
FR-A- 2 093 226
FR-A- 2 126 742
FR-A- 2 165 120
FR-A- 2 236 809
FR-A- 2 380 999
FR-A- 2 457 267
US-A- 1 731 053
US-A- 3 848 661

(73) Titulaire : **SOCIETE D'APPAREILLAGE ELECTRIQUE
SAPCO Société Anonyme dite:**
**7, rue de Dieppe**
**F-92400 Courbevoie (FR)**

(72) Inventeur : **Djeddah, Jacques Lucien**
**4, Avenue Jules Guesde**
**F-92330 Sceaux (FR)**

(74) Mandataire : **Jolly, Jean-Pierre et al**
**Cabinet BROT 83, rue d'Amsterdam**
**F-75008 Paris (FR)**

EP 0 056 757 B1

Jouve, 18, rue St-Denis, 75001 Paris, France

## Description

La présente invention concerne un brûleur à gaz d'une conception nouvelle ainsi qu'une chaudière utilisant un tel brûleur.

Les brûleurs à gaz connus sont pratiquement de deux types : d'une part, les brûleurs métalliques à multi-trous ou fentes utilisés par exemple dans les cuisinières à gaz, ou les rampes métalliques à multi-trous ou fentes utilisées dans les chaudières à gaz atmosphériques, radiateurs, chauffe-eau, etc... et, d'autre part, les brûleurs en céramique percés de trous par usinage, moulage, ou injection.

Les brûleurs métalliques du premier type ont l'inconvénient de nécessiter, pour leur bon fonctionnement, non seulement de l'air primaire, mais également de l'air secondaire complémentaire et indispensable, c'est-à-dire de l'air se mélangeant au gaz à la sortie des fentes et des trous des brûleurs. Or, cet air secondaire n'étant pratiquement pas dosable et contrôlable, il ne peut que faire chuter le rendement du brûleur. Il serait impensable de vouloir augmenter le rendement de ces brûleurs en éliminant l'air secondaire, sans prendre d'énormes précautions ayant pour but d'éviter à tout prix un excès d'air primaire qui provoquerait un accrochage de la flamme sur la paroi du brûleur et donc l'échauffement de celui-ci au-delà des limites tolérables et sa destruction rapide. Pour éviter ce dernier inconvénient, on se restreint volontairement au niveau des bas rendements en utilisant de l'air secondaire et en diminuant l'admission d'air primaire induit dans les brûleurs atmosphériques proprement dits et, dans les installations atmosphériques exemptes d'air secondaire, en veillant rigoureusement à éviter que la flamme ne soit accrochée au brûleur métallique.

Quant aux brûleurs en céramique à multi-trous, lesdits trous présentent une trop faible perte de charge pour permettre un bon accrochage de la flamme en air primaire total et d'autre part, la réalisation des trous est une opération délicate qui augmente notablement le prix de revient du produit fini.

On connaît certes par le brevet FR-A-2 126 742 un brûleur en céramique poreuse formé d'un noyau perméable constitué par des fractions granulométriques d'une matière réfractaire, entouré d'une enveloppe latérale en matière réfractaire, le noyau et l'enveloppe étant frittés, mais ce brûleur, qui comporte deux éléments de base, a une structure compliquée, est difficile à fabriquer et est donc relativement coûteux.

Selon le brevet FR-A-2 457 267, on évite le fendillement des brûleurs en céramique poreuse, en ajoutant des particules de $Zr\,O_2$ et de $Hf\,O_2$, ces particules se formant par une réaction chimique in situ après frittage de mélange. On conçoit qu'un tel procédé de fabrication du brûleur est long et exige de surveiller le moment où la réaction chimique doit être amorcée.

Le brevet FR-A-2 380 999 décrit de son côté un procédé de fabrication de produits en alumine à haute porosité, consistant à utiliser une poudre très fine d'alumine que l'on agglomère en granulés et à mouler les granulés avant de les fritter. Un tel procédé de fabrication présente les mêmes inconvénients que ceux du brûleur selon le brevet FR-A-2 457 267 et oblige de plus à utiliser de la poudre fine d'alumine qui est un produit relativement cher.

Le brevet FR-A-2 236 809 concerne un corps artificiel comportant une matière dure, telle que le corindon et un liant au silicate de calcium. L'imprégnation des matières dures par les liants temporaires est difficile à obtenir et fait appel à des fours, des fusions et des mélanges compliqués, ainsi qu'à une opération de granulation.

On connaît d'autre part des chaudières à gaz dans lesquelles la combustion est réalisée par air primaire exclusivement, mais qui utilisent des brûleurs en acier réfractaire inoxydable perforés et équipés d'extracteurs appropriés à l'entraînement de la quantité d'air primaire nécessaire à la combustion du gaz.

C'est ainsi que le brevet FR-A-1 056 484 décrit un dispositif de chauffage constitué par un brûleur en matière métallique poreuse à travers lequel suinte un mélange de gaz combustible et d'air comburant qui est allumé sur la surface externe du brûleur. Cependant, il est précisé dans ce brevet que le combustible gazeux peut être mélangé avec de l'air primaire, ce qui signifie que le gaz comburant est obligatoirement de l'air secondaire. Un tel brûleur, qui utilise de l'air secondaire aura donc un faible rendement, comme on l'a expliqué précédemment. Le fonctionnement d'un tel brûleur avec uniquement de l'air primaire est complètement exclu car en raison de sa composition (qui fait intervenir des particules métalliques) et de son procédé de fabrication (par moulage et chauffage jusqu'à la température de frittage ou de fusion) le brûleur risque d'être porté au rouge et d'être détruit. De plus, l'accrochage de la flamme risque de provoquer à la longue des fendillements à la chauffe et au refroidissement.

En outre, ce brûleur, qui est réalisé par l'assemblage de trois pièces distinctes, est de structure compliquée et est donc coûteux.

Le brevet U.S.-A-1 731 053 décrit un brûleur en matière réfractaire poreuse, qui, pour éviter les risques de fendillement provoqués par les contraintes thermiques et que l'on rencontre dans les brûleurs en céramique, comporte des tranchées croisées. Outre le fait que de telles cannelures compliquent la forme du brûleur, il ressort de ce brevet que la face du brûleur sur laquelle s'accroche la flamme est exposée à l'atmosphère, c'est-à-dire à l'air secondaire. Le rendement d'un tel brûleur est donc faible.

La présente invention a pour but de remédier à tous ces inconvénients en proposant un brûleur à gaz en céramique poreuse, qui soit simple à fabriquer et qui puisse éventuellement fonctionner uniquement avec de l'air primaire, donc avec un excellent rendement, tout en supportant les températures relativement élevées qui se manifestent à sa surface.

A cet effet, le brûleur à gaz selon l'invention est réalisé en une seule pièce à partir d'un mélange d'alumine, tel que corindon, sillimanite ou mullite de granulométrie comprise entre 0,2 et 2,5 mm, de liant définitif, tel que l'argile ou la bentonite dans une proportion de 10 à 40 % en poids, du mélange de liants temporaires du type fécule, dextrine ou alginate dans une proportion de 1 à 10 % en poids du mélange, et d'eau dans une proportion de 1 à 10 % en poids du mélange, les pores dudit corps étant répartis sur toute sa surface et déterminant une perte de charge de l'ordre de 1 à 20 mm de colonne d'eau pour le mélange de gaz de combustion et d'air primaire qui les traverse, la face de sortie du brûleur sur laquelle se forme la flamme étant exposée à une atmosphère dépourvue d'air secondaire.

La composition céramique est préparée à partir d'un mélange d'une variété d'alumine, telle que le corindon, la sillimanite, ou la mullite etc... ayant une granulométrie moyenne comprise entre 0,2 et 2,5 mm, d'un liant définitif tel que l'argile ou la bentonite dans une proportion de 10 à 40 % en poids, de liants temporaires du type fécule, dextrine ou alginate dans une proportion de 1 à 10 % en poids, et de 1 à 10 % d'eau.

Le mélange est tamisé dans un tamis de 1 à 2,5 mm de grosseur de mailles, puis pressé isostatiquement, de préférence dans des moules appropriés sous forme de corps creux ouverts à une extrémité ou de plaques, etc... Le corps pourra être avantageusement en forme d'éprouvette ou creuset. On effectue ensuite le séchage et la cuisson dans un four céramique à une température comprise entre 1 000 et 1 600 °C selon la composition du mélange. On obtient ainsi un corps céramique à texture poreuse dont les pores sont répartis sur toute la surface du corps.

La présente invention concerne également une chaudière qui utilise comme brûleur, le brûleur en céramique poreuse décrit précédemment.

Selon un mode de réalisation particulier de l'invention, la chaudière comprend deux enveloppes concentriques définissant entre elles une chambre annulaire étanche dans laquelle est entretenue une circulation de fluide caloporteur, tel que l'eau, le brûleur étant monté à l'intérieur de l'enveloppe interne de la chaudière, avec son ouverture tournée du côté d'un injecteur de gaz et s'adaptant avec étanchéité à l'ouverture d'entrée de l'enveloppe interne. La chambre intérieure de l'enveloppe interne peut être soit mise en dépression, la dépression étant exercée à partir de l'aval du brûleur, soit fonctionner sous pression, la pression étant exercée du côté de l'admission du gaz.

La totalité de l'air primaire nécessaire à la combustion du gaz est aspirée dans le corps céramique par les moyens aspirateurs et mélangée intimement au gaz de combustion dans les pores de la céramique, de sorte qu'à la sortie des pores, sur toute la surface périphérique externe du brûleur, apparaît un mélange inflammable qui peut être flambé par les moyens classiques d'allumage, tels que bougies ou pilotes.

Le brûleur selon l'invention peut voir sa superficie portée à des températures de l'ordre de 800 °C c'est-à-dire au rouge vif, sans risque de détérioration ou de diminution de la durée de service. Une telle température ne peut être atteinte ni avec les brûleurs métalliques sans détérioration certaine, ni avec les brûleurs céramiques à multi-trous du fait que la perte de charge est trop faible.

Le brûleur et la chaudière selon l'invention fonctionnent exclusivement en air primaire total puisque l'enceinte dans laquelle est monté le brûleur est étanche vis-à-vis de l'air secondaire et peut être mise en dépression. Il en résulte que le brûleur n'est pas refroidi comme c'est le cas pour les brûleurs fonctionnant avec air secondaire et que le rendement du brûleur est de ce fait notablement supérieur à celui desdits brûleurs à air secondaire.

En augmentant davantage la porosité de la céramique, autrement dit en réduisant la perte de charge à un minimum de l'ordre de 1 à 5 mm de colonne d'eau, le brûleur en céramique de même conception permettrait une utilisation atmosphérique proprement dite (c'est-à-dire sans extraction mécanique et avec de l'air secondaire) modulable en fonction de la quantité de gaz. Il pourrait même fonctionner avec un excès d'air primaire, ce qui est tout à fait exclu avec un brûleur métallique. Un tel brûleur à faible perte de charge pourrait fonctionner avec de l'air primaire et de l'air secondaire périphérique en assumant des rendements supérieurs à ceux des brûleurs en acier inoxydable. La durée de service des brûleurs en acier inoxydable à air primaire et secondaire est en effet notablement raccourcie si la flamme est bien accrochée, c'est-à-dire dans le cas de très bons rendements, alors que dans le brûleur céramique de l'invention, la flamme est par définition bien accrochée et malgré cela elle ne menace pas la longévité du brûleur.

Les brûleurs tout gaz du type en acier inoxydable ou plus généralement en métal, tels que ceux utilisés dans les chauffe-eau, les chauffe-bains, les radiateurs, les chaudières murales ou au sol ont, dans les meilleures conditions, des rendements de combustion, mesurés en teneur de gaz carbonique, de l'ordre de 6 à 9 %. L'utilisation de brûleurs en céramique, selon l'invention permet d'atteindre des rendements pouvant excéder de 20 % ou même davantage ces rendements précités que l'on peut obtenir avec extraction d'air primaire et sans air secondaire, et de l'ordre de 15 % ou davantage dans le cas de leur utilisation comme brûleur atmosphérique à air primaire induit et air secondaire ambiant. Dans l'évaluation de ces rendements, on ne tient pas compte, bien entendu, du gain en calories par rayonnement de la céramique portée au rouge. Les brûleurs métalliques au contraire n'émettent pratiquement aucune énergie par rayonnement, sauf s'ils sont portés au rouge, c'est-à-dire juste avant leur destruction.

On notera encore que la combustion va en s'améliorant, dans le cas du brûleur et de la chaudière de l'invention, au fur et à mesure que la température de l'élément poreux en céramique s'élève jusqu'au rouge vif.

D'autre part, dans les brûleurs métalliques, le centrage et le positionnement de l'injecteur, le diamètre de perçage de ce dernier, la forme, la position et l'importance du Venturi sont des paramètres critiques, alors que dans le brûleur en céramique selon l'invention, ces paramètres peuvent être choisis moins rigoureusement.

De plus, dans les brûleurs à gaz atmosphériques, en métal existe toujours un danger aussi réduit soit-il d'une mise à feu à l'injecteur qui provoque une flamme interne, le réchauffement de la paroi métallique et sa détérioration. Le brûleur en céramique poreuse selon l'invention résiste avec succès à de telles contraintes éventuelles.

De même, quand la chaudière « étanche » de l'invention arrive à température et que le thermostat commande la coupure, l'absence d'air secondaire incontrôlé assure un maintien en température plus favorable que lorsque l'air secondaire des chaudières atmosphériques proprement dites continue à circuler de plus belle en entraînant les calories vers la cheminée d'évacuation.

On notera enfin qu'à l'arrêt, le brûleur céramique est totalement silencieux alors que les brûleurs tout gaz métalliques crépitent lors de leur refroidissement.

Un mode de réalisation de l'invention sera décrit à présent en détail en regard du dessin annexé dans lequel :

La figure 1 représente une vue en coupe axiale d'un brûleur céramique en forme de creuset, selon un premier mode de réalisation de l'invention ;

La figure 2 représente une vue en coupe transversale d'un brûleur céramique en forme de plaque selon un second mode de réalisation de l'invention ; et

La figure 3 est une vue en coupe axiale d'une chaudière selon l'invention incorporant le brûleur de la figure 1.

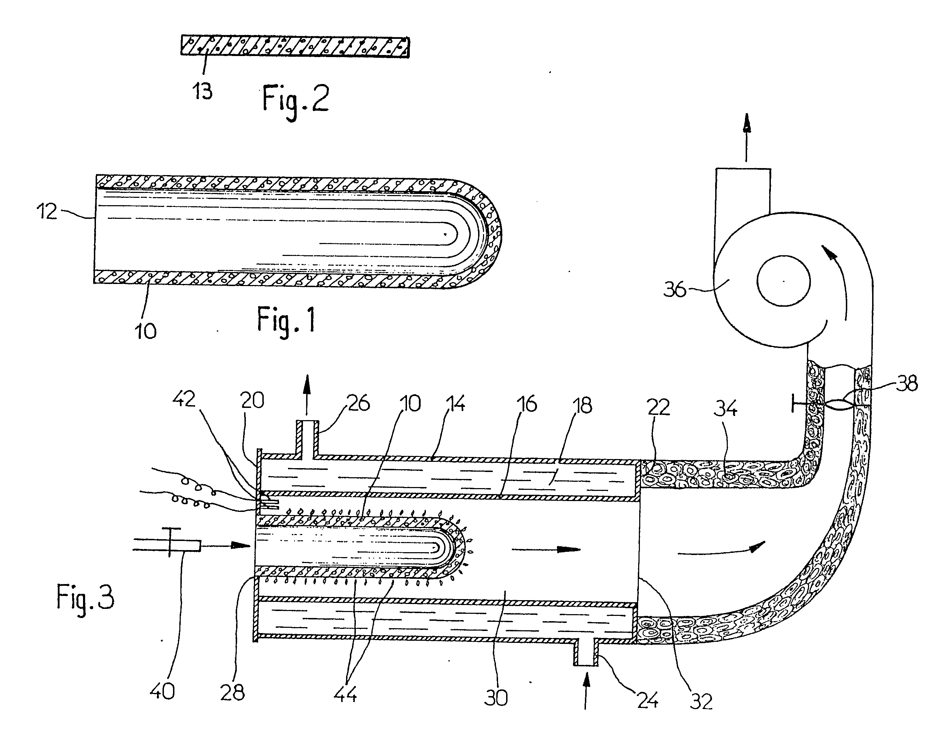

Le brûleur 10 représenté sur la figure 1 est en céramique poreuse dont la composition et le mode de fabrication ont été précisés précédemment. Le brûleur est en forme d'éprouvette ou creuset ouverte à une extrémité 12 et fermée à l'autre extrémité. Il comporte une multitude de pores répartis sur toute sa surface et qui constituent des chemins de passage pour le fluide gazeux (air + gaz de combustion) admis à l'intérieur du brûleur. Les pores sont dimensionnés de manière à provoquer une perte de charge du mélange gaz de combustion-air primaire de l'ordre de 1 à 20 mm de colonne d'eau.

Le brûleur 13 montré à la figure 2 est également réalisé en céramique par le même procédé que le brûleur 10. Il est en forme de plaque et ses pores sont dimensionnés pour permettre le passage du fluide gazeux à travers la plaque, avec une perte de charge de 1 à 20 mm de colonne d'eau.

Les formes décrites pour le brûleur ne sont données qu'à titre d'exemple, car le brûleur peut avoir toute autre forme appropriée, convenant au mieux à l'utilisation à laquelle le brûleur est destiné.

Avec référence à la figure 3, la chaudière selon l'invention comprend deux enveloppes concentriques 14, 16 en métal, définissant entre elles une chambre annulaire 18 fermée à ses extrémités d'entrée et de sortie par des parois terminales 20, 22. La chambre 18 est remplie d'un fluide caloporteur, tel que l'eau, mis en circulation par des moyens appropriés non représentés, à travers une tubulure d'entrée 24 et une tubulure de sortie 26.

Dans l'enveloppe interne 16 est monté un brûleur 10 analogue à celui de la figure 1. Le brûleur est adapté avec étanchéité, par son extrémité ouverte, dans un orifice 28 percé dans la paroi 20 qui obture l'extrémité d'entrée de la chambre 30 définie à l'intérieur de l'enveloppe interne 16. L'extrémité de sortie 32 de cette dernière est ouverte et est raccordée à une tuyauterie d'aspiration 34 équipée d'un ventilateur 36 et d'une vanne 38 permettant de doser le débit du mélange air primaire et gaz aspiré à travers les pores du brûleur.

Le gaz de combustion est insufflé à l'intérieur du brûleur par un injecteur 40 monté sensiblement dans l'axe du brûleur. Des électrodes 42, débouchant à l'intérieur de la chambre 30 au voisinage de la surface externe du brûleur permettent, lorsqu'elles sont mises sous tension, d'enflammer le mélange gazeux sortant par les pores du brûleur. On obtient ainsi une multitude de petites flammes 44 uniformément réparties et bien accrochées sur la surface du brûleur.

Comme on peut le voir sur la figure 2, la chaudière et le brûleur ne fonctionnent qu'avec de l'air primaire, en l'absence d'air secondaire périphérique. Le brûleur peut de ce fait être porté à des températures de l'ordre de 800 °C sans risque de détérioration. On atteint ainsi des rendements notablement plus élevés qu'avec les brûleurs métalliques.

**Revendications**

1. Brûleur à gaz constitué par un corps en céramique poreuse à l'exclusion de toute particule métallique, caractérisé en ce qu'il est réalisé en une seule pièce à partir d'un mélange d'alumine, tel que corindon, sillimanite ou mullite de granulométrie comprise entre 0,2 et 2,5 mm, de liant définitif, tel que l'argile ou la bentonite dans une proportion de 10 à 40 % en poids, du mélange de liants temporaires du type fécule, dextrine ou alginate dans une proportion de 1 à 10 % en poids du mélange, et d'eau dans une proportion de 1 à 10 % en poids du mélange, les pores dudit corps étant répartis sur toute sa surface et déterminant une perte de charge de l'ordre de 1 à 20 mm de colonne d'eau pour le mélange de gaz de combustion et d'air primaire qui les traverse, la face de sortie du brûleur sur laquelle se forme la flamme étant exposé à une atmosphère dépourvue d'air secondaire.

2. Brûleur selon la revendication 1, caractérisé en ce qu'il présente la forme d'un creuset et éprouvette en une seule pièce, ouvert à une extrémité et fermé à l'autre extrémité.

3. Brûleur selon la revendication 1, caractérisé en ce qu'il se présente sous forme de plaque (13).

4. Procédé de fabrication du brûleur selon l'une des revendications 1 et 2, caractérisé en ce que l'on prépare un mélange d'alumine, tel que corindon, sillimanite ou mullite de granulométrie comprise entre 0,2 et 2,5 mm, d'un liant définitif, tel que l'argile ou la bentonite dans une proportion de 10 à 40 % en poids, de liants temporaires du type fécule, dextrine ou alginate dans une proportion de 1 à 10 % en poids, et de 1 à 10 % d'eau, on tamise finement ledit mélange dans un tamis de 1 à 2,5 mm de grosseur de maille, on presse isostatiquement le mélange dans des moules appropriés et on effectue un séchage du corps ainsi obtenu et une cuisson à une température comprise entre 1 000 et 1 600 °C.

5. Chaudière à gaz du type dans laquelle la combustion est réalisée exclusivement par air primaire et équipée d'un extracteur destiné à l'entraînement de la quantité d'air primaire nécessaire à la combustion du gaz, caractérisée en ce qu'elle comporte un brûleur en céramique (10) selon l'une des revendications 1 à 3.

6. Chaudière selon la revendication 5, caractérisée en ce qu'elle comprend deux enveloppes concentriques (14, 16) définissant entre elles une chambre annulaire étanche (18) dans laquelle est entretenue une circulation de fluide caloporteur, tel que l'eau, le brûleur (10) étant monté à l'intérieur de l'enveloppe interne (16) de la chaudière, avec son ouverture tournée du côté d'un injecteur de gaz (40) et s'adaptant avec étanchéité à l'ouverture d'entrée (28) de l'enveloppe interne.

7. Chaudière selon l'une des revendications 5 et 6, caractérisée en ce que la chambre intérieure (30) de l'enveloppe interne (16) est mise en dépression par des moyens aspirateurs appropriés (36).

8. Chaudière selon l'une des revendications 5 et 6, caractérisée en ce que la chambre intérieure (30) de l'enveloppe interne (16) est mise sous pression par des moyens appropriés disposés du côté de l'admission du gaz et de l'air primaire.

**Claims**

1. Gas burner formed by a body made from porous ceramic to the exclusion of any metal particle, characterized in that it is formed in a single piece form a mixture of alumina, such as corindon, sillimanite or mullite having a grain size between 0.2 and 2.5 mm, a final binding agent, such as clay or bentonite in a proportion of 10 to 40 % by weight, a mixture of temporary binding agents of the fecula, dextrine or alginate type in a proportion of 1 to 10 % by weight of the mixture and water in a proportion of 1 to 10 % by weight of mixture, the pores of said body being spaced apart over the whole of its surface and defining a pressure drop of the order of 1 to 20 mm water column for the mixture of combustion gas and primary air which passes therethrough, the outlet face of the burner at which the flame is formed being exposed to an atmosphere deprived of secondary air.

2. Burner according to claim 1, characterized in that it is in the form of a one-piece crucible and test-tube, open at one end and closed at the other end.

3. Burner according to claim 1, characterized in that it is in the form of a plate (13).

4. Process for manufacturing the burner according to one of claims 1 and 2, characterized in that a mixture is prepared containing alumina, such as corindon, sillimanite or mullite having a grain size between 0.2 and 2.5 mm, a final binding agent, such as clay or bentonite in a proportion of 10 to 40 % by weight, temporary binding agents of the fecula, dextrine or alginate type in a proportion of 1 to 10 % by weight and 1 to 10 % of water, said mixture is finely screened in a screen with a mesh size of 1 to 2.5 mm, the mixture is isostatically pressed in appropriate moulds and the body thus obtained is dried and baked at a temperature between 1 000 and 1 600 °C.

5. Gas boiler of the type in which the combustion is provided exclusively by primary air and equipped with an extractor for feeding the amount of primary air required for combustion of the gas, characterized in that it comprises a ceramic burner (10) according to one of claims 1 to 3.

6. Boiler according to claim 5, characterized in that it comprises two concentric casings (14, 16) defining there-between a sealed annular chamber (18) in which is maintained a flow of heat-carrying fluid such as water, the burner (10) being mounted inside the inner casing (16) with its opening turned towards a gas injector (14) and sealingly fitted to the inlet opening (28) of the inner casing.

7. Boiler according to one of claims 5 and 6, characterized in that the inner chamber (30) of the inner casing (16) is placed under partial vacuum by appropriate suction means (36).

8. Boiler according to one of claims 5 and 6, characterized in that the inner chamber (30) of the inner casing (16) is pressurized by appropriate means disposed on the gas and primary air intake side.

**Patentansprüche**

1. Gasbrenner aus einem porösen keramischen Körper unter Ausschluß jeglicher Metallteilchen, dadurch gekennzeichnet, daß er, ausgehend von einem Gemisch aus Tonerde, wie Korund, Silimannit oder Mullit, mit einem Korngrößenbereich zwischen 0,2 und 2,5 mm, aus einem dauerhaften Bindemittel, wie Ton oder Bentonit, in einer Menge von 10 bis 40 Gew.-%, bezogen auf das Gemisch aus temporären Bindemitteln, wie Stärke, Dextrin oder Alginat, in einer Menge von 1 bis 10 Gew.-%, bezogen auf das Gemisch, und aus Wasser in einer Menge von 1 bis 10 Gew.-%, bezogen auf das Gemisch, in einem einzigen Stück hergestellt ist, wobei die Poren des Körpers auf seiner ganzen Oberfläche verteilt sind und einen Druckverlust in der Größenordnung von 20 mm Wassersäule für das Gemisch aus brennbarem Gas und Primärluft, das durch die Poren hindurchgeht, ergeben, und wobei die Austrittsfläche des Brenners, auf der sich die Flamme bildet, einer Atmosphäre ausgesetzt ist, die keine Sekundärluft enthält.

2. Brenner nach Anspruch 1, dadurch gekennzeichnet, daß er die Form eines einstückigen Tiegels bzw. Rohres hat, die an einem Ende offen und am anderen Ende geschlossen sind.

3. Brenner nach Anspruch 1, dadurch gekennzeichnet, daß er die Form einer Platte (13) hat.

4. Verfahren zur Herstellung des Brenners nach einem der Ansprüche 1 und 2, dadurch gekennzeichnet, daß man ein Gemisch aus Tonerde, wie Korund, Silimannit oder Mullit, mit einem Korngrößebereich zwischen 0,2 und 2,5 mm, aus einem dauerhaften Bindemittel, wie Ton oder Bentonit, in einer Menge von 10 bis 40 Gew.-%, aus temporären Bindemitteln wie Stärke, Dextrin oder Alginat, in einer Menge von 1 bis 10 Gew.-% und aus 1 bis 10 % Wasser herstellt, das Gemisch auf einem Sieb mit einer Maschenweite von 1 bis 2,5 mm fein siebt, das Gemisch isostatisch in geeignete Formen preßt und den so erhaltenen Körper trocknet und bei einer Temperatur zwischen 1 000 und 1 600 °C brennt.

5. Mit Gas beheizter Kessel des Typs, bei welchem die Verbrennung ausschließlich mit Primärluft erfolgt und der mit einer Ansaugvorrichtung zur Zufuhr der für die Verbrennung des Gases notwendigen Primärluftmenge versehen ist, dadurch gekennzeichnet, daß er einen keramischen Brenner (10) nach einem der Ansprüche 1 bis 3 enthält.

6. Kessel nach Anspruch 5, dadurch gekennzeichnet, daß er zwei konzentrische Hüllen (14, 16) enthält, die zwischen sich eine dichtschließende Ringkammer (18) einschließen, in welcher die Zirkulation eines Wärmeträgerfluids, wie Wasser, aufrechterhalten wird, wobei der Brenner (10) im inneren der inneren Hülle (16) des Kessels angebracht ist, wobei seine Öffnung der Seite einer Gaszuleitung (40) zugewandt ist und wobei er dichtschließend der Eintrittsöffnung (28) der Innenhülle angepaßt ist.

7. Kessel nach einem der Ansprüche 5 und 6, dadurch gekennzeichnet, daß die Innenkammer (30) der Innenhülle (16) durch geeignete Ansaugeinrichtungen (36) unter Unterdruck gesetzt wird.

8. Kessel nach einem der Ansprüche 5 und 6, dadurch gekennzeichnet, daß die Innenkammer (30) der Innenhülle (16) durch geeignete Einrichtungen unter Druck gesetzt wird, die auf der Seite angeordnet sind, an der das Gas und die Primärluft zugeführt werden.

Fig.2

Fig.1

Fig.3

0 056 757